(19) Europäisches Patentamt
European Patent Office
Office européen des brevets

(11) **EP 4 685 910 A1**

(12) **EUROPEAN PATENT APPLICATION**
published in accordance with Art. 153(4) EPC

(43) Date of publication:
**28.01.2026   Bulletin 2026/05**

(21) Application number: **24774666.2**

(22) Date of filing: **05.03.2024**

(51) International Patent Classification (IPC):
**H01M 10/058** (2010.01)   **H01M 4/134** (2010.01)
**H01M 10/052** (2010.01)   **H01M 10/0562** (2010.01)

(52) Cooperative Patent Classification (CPC):
**H01M 4/134; H01M 10/052; H01M 10/0562;
H01M 10/058;** Y02E 60/10; Y02P 70/50

(86) International application number:
**PCT/JP2024/008331**

(87) International publication number:
**WO 2024/195523 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2023   JP 2023046041**

(71) Applicant: **TOYOTA JIDOSHA KABUSHIKI
KAISHA
Toyota-shi, Aichi 471-8571 (JP)**

(72) Inventors:
• **KANEKO, Sakina
Toyota-shi, Aichi 471-8571 (JP)**
• **LI, Ximeng
Toyota-shi, Aichi 471-8571 (JP)**
• **KODAMA, Masashi
Toyota-shi, Aichi 471-8571 (JP)**
• **MATSUNAGA, Tomoya
Toyota-shi, Aichi 471-8571 (JP)**
• **SHIOTANI, Shinya
Toyota-shi, Aichi 471-8571 (JP)**
• **ASAKURA, Ryo
Toyota-shi, Aichi 471-8571 (JP)**

(74) Representative: **D Young & Co LLP
3 Noble Street
London EC2V 7BQ (GB)**

(54) **SOLID-STATE BATTERY, AND SOLID-STATE BATTERY MANUFACTURING METHOD**

(57)   A solid-state battery of the present disclosure includes a positive electrode layer, a solid electrolyte layer, and a negative electrode layer in this order. The negative electrode layer has a negative electrode current collector and a negative electrode active material layer in this order, in a direction from the negative electrode layer toward a side of the solid electrolyte layer. When the solid-state battery is at full charge, the negative electrode active material layer has an Li layer, an Li-Mg layer, or an Li-Mg-X layer and an Li-X layer in this order, in the direction from the negative electrode layer toward the side of the solid electrolyte layer. X is at least one selected from the group consisting of Sn, Zn, and Al. The Li-X layer is formed on a surface of the solid electrolyte layer.

EP 4 685 910 A1

## Description

TECHNICAL FIELD

The present disclosure relates to a solid-state battery and a solid-state battery manufacturing method.

BACKGROUND ART

Conventionally, solid-state batteries have been known as lithium-ion secondary batteries that excel in safety.

Patent Document 1 discloses an all-solid-state secondary battery (hereinafter also called "the solid-state battery"). The solid-state battery disclosed in patent document 1 includes a negative electrode layer, a solid electrolyte layer, and a positive electrode layer that are laminated in this order. The negative electrode layer has a negative electrode current collector and a coating layer that coats the negative electrode current collector. The coating layer and the solid electrolyte layer oppose each other. In the solid-state battery disclosed in patent document 1, metallic lithium is deposited between the coating layer and the solid electrolyte layer during charging. Specifically, in Patent Document 1, a layer comprising zinc (hereinafter also called "the zinc layer") is disclosed as the coating layer. The zinc layer is formed by sputtering on a surface of the negative electrode current collector.

Patent Document 1: JP-A No. 2018-129159

SUMMARY OF INVENTION

Technical Problem

However, in the solid-state battery disclosed in Patent Document 1, there is the concern that the capacity retention rate of the solid-state battery after charge and discharge cycles may be low.

The present disclosure is in consideration of the above circumstances.

A problem to be solved by one embodiment of the present disclosure is to provide a solid-state battery having a high capacity retention rate and a method of manufacturing the solid-state battery.

Solution to Problem

Means for solving the above problem including the following aspects.

<1> A solid-state battery, comprising a positive electrode layer, a solid electrolyte layer, and a negative electrode layer in this order, wherein

the negative electrode layer has a negative electrode current collector and a negative electrode active material layer in this order, in a direction from the negative electrode layer toward a side of the solid electrolyte layer, when the solid-state battery is at full charge, the negative electrode active material layer has an Li layer, an Li-Mg layer, or an Li-Mg-X layer and an Li-X layer in this order, in the direction from the negative electrode layer toward the side of the solid electrolyte layer,
X is at least one selected from the group consisting of Sn, Zn, and Al, and
the Li-X layer is formed on a surface of the solid electrolyte layer.

<2> The solid-state battery of <1>, wherein, when the solid-state battery is at full charge, the negative electrode active material layer has the Li-Mg layer or the Li-Mg-X layer and the Li-X layer.

<3> The solid-state battery of <1> or <2>, wherein, when the solid-state battery is at full charge, the negative electrode active material layer has the Li-Mg layer and an Li-Sn layer in this order, in the direction from the negative electrode layer toward the side of the solid electrolyte layer.

<4> The solid-state battery of <1> or <2>, wherein, when the solid-state battery is at full charge, the negative electrode active material layer has an Li-Mg-Zn layer and an Li-Zn layer in this order, in the direction from the negative electrode layer toward the side of the solid electrolyte layer.

<5> The solid-state battery of <1> or <2>, wherein, when the solid-state battery is at full charge, the negative electrode active material layer has an Li-Mg-Al layer and an Li-Al layer in this order, in the direction from the negative electrode layer toward the side of the solid electrolyte layer.

<6> The solid-state battery of <1>, wherein, when the solid-state battery is at full charge, the negative electrode active material layer has an Li layer and an Li-X layer in this order, in the direction from the negative electrode layer toward the side of the solid electrolyte layer.

<7> The solid-state battery of <6>, wherein, when the solid-state battery is at full charge, the negative electrode active material layer has an Li layer and an Li-Sn in this order, in the direction from the negative electrode layer toward the side of the solid electrolyte layer.

<8> A method of manufacturing a solid-state battery having a positive electrode layer, a solid electrolyte layer, and a negative electrode layer in this order, the method comprising:

a step of forming an X layer on a surface of the solid electrolyte layer at a side of the negative electrode layer, wherein X is at least one selected from the group consisting of Sn, Zn, and Al.

<9> The solid-state battery manufacturing method of <8>, wherein:

the negative electrode layer has a negative electrode current collector, and
the method further comprises the step of forming an Mg layer on a surface of the negative electrode current collector at a side the solid electrolyte layer.

Advantageous Effects of Invention

According to the present disclosure, a solid-state battery having a high capacity retention rate and method of manufacturing the solid-state battery are provided.

DETAILED DESCRIPTION

In the present disclosure, a numerical range expressed using "to" means a range that includes the numerical values appearing before and after the "to" as a minimum value and a maximum value, respectively. In numerical ranges that are progressively stated in the present disclosure, the upper limit value or the lower limit value stated for a given numerical range may be replaced with the upper limit value or the lower limit value of another progressively stated numerical range. In numerical ranges that are stated in the present disclosure, the upper limit value or the lower limit value stated for a given numerical range may be replaced with values described in the Examples. In the present disclosure, combinations of two or more preferred aspects are more preferred aspects. In the present disclosure, when referring to the amount of each component, if plural types of materials applicable to each component are present, the amount means the total amount of the plural types of materials unless otherwise specified. In the present disclosure, the term "step" includes not only an independent step but also a step that cannot be clearly distinguished from another step as long as the intended object of that step is achieved.

(1) Solid-state Battery

The solid-state battery of the present disclosure includes a positive electrode layer, a solid electrolyte layer, and a negative electrode layer in this order. The negative electrode layer has a negative electrode current collector and a negative electrode active material layer in this order, in a direction from the negative electrode layer toward a side of the solid electrolyte layer (hereinafter also called "the SE direction"). When the solid-state battery is at full charge (hereinafter also simply called "at full charge"), the negative electrode active material layer has an Li (lithium) layer, an Li-Mg (magnesium) layer, or an Li-Mg-X layer and an Li-X layer in this order, in the direction from the negative electrode layer toward the side of the solid electrolyte layer. X (hereinafter also called "the metal element X") is at least one selected from the group consisting of Sn (tin), Zn (zinc), and Al (aluminum). The Li-X layer is formed on a surface of the solid electrolyte layer.

In the present disclosure, "when the solid-state battery is at full charge" means that the state of charge (SOC) of the solid-state battery is 100%. The SOC is the ratio of the charge capacity to the full charge capacity of the solid-state battery. At the full charge capacity, the SOC is 100%.

"Li layer" refers to a metal layer whose main component is the element lithium. More specifically, "Li layer" refers to a layer in which the percentage of the element lithium is 98 at% or higher relative to the total amount of all elements configuring the layer and more preferably refers to a layer in which it is 99.8 at% or higher relative to the total amount of all elements. The percentage of the element lithium in the Li layer may be 100 at%. The Li layer may be formed by a deposition reaction of metallic lithium associated with charging the solid-state battery.

"Li-Mg layer" refers to an alloy layer whose main components are the element lithium and the element magnesium. More specifically, "Li-Mg layer" refers to a layer in which the percentage of the element lithium is 75 at% or higher and the percentage of the element magnesium is 0.3 at% or higher relative to the total amount of all elements configuring the layer when the solid-state battery is at full charge. The percentage of the element lithium may be 75 at% to 99.7 at%, the percentage of the element magnesium may be 0.3 at% to 20 at%, and the percentage of the element magnesium may be 0.3 at% to 25 at%.

"Li-Mg-X layer" refers to an alloy layer whose main components are the element lithium, the element magnesium, and the metal element X. More specifically, "Li-Mg-X layer" refers to a layer in which the percentage of the element lithium is 45 at% or higher, the percentage of the element magnesium is 0.3 at% or higher, and the percentage of the metal element X is 0.1 at% or higher relative to the total amount of all elements configuring the layer. The percentage of the metal element X may be 0.1 at% to 5 at%, the percentage of the element magnesium may be 0.3 at% to 45 at%, the percentage of the element lithium may be 45 at% to 99.6 at%, and the percentage of the element lithium may be 50 at% to 99.6 at%.

"Li-X layer" refers to an alloy layer whose main components are the element lithium and the metal element X. More specifically, "Li-X layer" refers to a layer in which the percentage of the element lithium is 80 at% or higher and the percentage of the metal element X is 0.1 at% or higher relative to the total amount of all elements configuring the layer. The percentage of the metal element X may be 0.1 at% to 15 at%, the percentage of the element lithium may be 80 at% to 99.9 at%, and the percentage of the element lithium may be 85 at% to 99.9 at%.

"The Li-X layer is formed on a surface of the solid electrolyte layer" means that an Li layer is not interposed between the Li-X layer and the solid electrolyte layer when the solid-state battery is at full charge.

Since the solid-state battery of the present disclosure has the above configuration, its capacity retention rate is high.

This effect is presumably for, but is not limited to, the following reasons.

It is known that when a solid electrolyte layer and metallic lithium are physically in contact with each other when a solid-state battery is charged and discharged, a reductive decomposition reaction of the solid electrolyte layer progresses. If the reductive decomposition reaction of the solid electrolyte layer progresses, there is the concern that a layer that causes interfacial resistance (hereinafter also called a "resistance layer") will be formed between the solid electrolyte layer and the negative electrode layer. As a result, there is the concern that the capacity retention rate of the solid-state battery will become lower.

In the present disclosure, the Li-X layer is formed on the surface of the solid electrolyte layer. In other words, when the solid-state battery is being charged, an Li layer is not interposed between the Li-X layer and the solid electrolyte layer. That is, a reductive decomposition reaction of the solid electrolyte layer is unlikely to progress. Because of this, a resistance layer is unlikely to be formed. Moreover, in the present disclosure, when the solid-state battery is charged and discharged, at the interface between the solid electrolyte layer and the negative electrode layer, lithium ions more easily diffuse than when the Li-X layer is not formed on the surface of the solid electrolyte layer. Presumably as a result of this, the solid-state battery of the present disclosure has a high capacity retention rate.

(1.1) Battery Structure

The structure of the solid-state battery has a positive electrode layer / solid electrolyte layer / negative electrode layer laminate structure. The solid-state battery includes what is called an all-solid-state battery that uses a solid electrolyte as the electrolyte, and the solid electrolyte may include an electrolyte solution of less than 10 mass% relative to the total amount of the electrolyte. It will be noted that the solid electrolyte may be a composite solid electrolyte that includes an inorganic solid electrolyte and a polymer electrolyte.

When the set of the positive electrode layer, the solid electrolyte layer, and the negative electrode layer configures an electric generating unit, the solid-state battery may have just one or two or more electric generating units. When the solid-state battery has two or more electric generating units, the electric generating units may be connected in series or connected in parallel.

The solid-state battery may be configured such that laminate end surfaces (side surfaces) of the positive electrode layer / solid electrolyte layer / negative electrode layer laminate structure are sealed with a resin. The shape of the solid-state battery is not particularly limited, and the solid-state battery may, for example, be a coin type, a cylindrical type, a prismatic type, a sheet type, a button type, a flat type, or a laminate type.

(1.2) Negative Electrode Layer

The solid-state battery includes a negative electrode layer. The negative electrode layer has a negative electrode current collector and a negative electrode active material layer in this order in the SE direction.

(1.2.1) Negative Electrode Active Material Layer

The negative electrode layer has a negative electrode active material layer. At full charge, the negative electrode active material layer has an Li layer, an Li-Mg layer, or an Li-Mg-X layer and an Li-X layer in this order, in the direction from the negative electrode layer toward the side of the solid electrolyte layer. The metal element X is at least one selected from the group consisting of Sn, Zn, and Al. The Li-X layer is formed on the surface of the solid electrolyte layer.

The method of judging the layer configuration of the negative electrode active material layer is the same method as the method described in the Examples.

The metal element X may be one selected from the group consisting of Sn, Zn, and Al.

When the metal element X is Sn and the negative electrode active material layer includes Mg, the negative electrode active material layer at full charge tends to include an Li-Mg layer and to not include an Li-Mg-Sn layer. Presumably this is because the alloying potential of Sn and Li is higher than the deposition potential of Li, so the reaction progresses in two stages. More specifically, presumably during charging an Li-Sn layer is formed first and thereafter Li and Mg alloying and a Li deposition reaction occur, resulting in the formation of an Li-Mg layer.

When the metal element X is Zn and the negative electrode active material layer includes Mg, the negative electrode active material layer at full charge tends to include an Li-Mg-Zn layer and to not include an Li-Mg layer. Presumably this is because the alloying potential of Li-Zn is lower than the alloying potential of Li-Mg, so an Li-Mg-Zn layer is formed at the same time as Li deposition, resulting in a structure mixed with Li-Mg.

When the metal element X is Al and the negative electrode active material layer includes Mg, the negative electrode active material layer at full charge tends to include an Li-Mg-Al layer and to not include an Li-Mg layer. Presumably this is because the alloying potential of Li-Al is lower than the alloying potential of Li-Mg, so the Li-Mg-Al layer is formed at the same time as Li deposition, resulting in a structure mixed with Li-Mg.

When the negative electrode active material layer does not contain Mg, at full charge the percentage of the metal element X and the percentage of Li are preferably within the following ranges from the standpoint of increasing the capacity retention rate of the solid-state battery.

The percentage of the metal element X is preferably 0.05 at% to 15.0 at%, more preferably 0.12 at% to 2.0 at%, and even more preferably 0.3 at% to 1.0 at% relative to the total amount of the negative electrode active material layer.

The percentage of Li is not particularly limited and may be 85.0 at% to 99.5 at%, 98.0 at% to 99.88 at%, or 99.0 at% to 99.7 at% relative to the total amount of the negative electrode active material layer.

The method of calculating the percentages is a method where, in an all-solid-state battery at a full state of charge, the negative electrode layer is removed from the solid-state battery and an inductively coupled plasma (ICP) analysis is performed on the negative electrode layer to thereby calculate the percentages of the elements in the alloy included in the negative electrode layer. The method of calculating the percentages is the same hereinafter.

When the negative electrode active material layer does not contain Mg, the thickness of the Li layer and the thickness of the Li-X layer at full charge may be within the following ranges. The thickness of the Li layer is not particularly limited and may be 1 $\mu$m to 30 $\mu$m. The thickness of the Li-X layer is not particularly limited and may be 10 nm to 3,000 nm.

When the negative electrode active material layer contains Mg, the percentage of the metal element X, the percentage of Li, and the percentage of Mg at full charge are preferably within the following ranges from the standpoint of increasing the capacity retention rate of the solid-state battery.

The percentage of the metal element X is preferably 0.05 at% to 15.0 at%, more preferably 0.12 at% to 2.0 at%, and even more preferably 0.3 at% to 1.0 at% relative to the total amount of the negative electrode active material layer.

The percentage of Li is not particularly limited and may be 85.0 at% to 99.5 at%, 98.0 at% to 99.88 at%, 99.0 at% to 99.7 at%, 60 at% to 99.85 at%, 78 at% to 99.58 at%, or 93 at% to 98.9 at% relative to the total amount of the negative electrode active material layer.

The percentage of Mg is not particularly limited and is preferably 0.1 at% to 25.0 at%, more preferably 0.3 at% to 20.0 at%, and even more preferably 0.8 at% to 6.0 at% relative to the total amount of the negative electrode active material layer.

When the negative electrode active material layer contains Mg, the thickness of the Li-Mg layer, the thickness of the Li-Mg-X layer, and the thickness of the Li-X layer at full charge may be within the following ranges.

The thickness of the Li-Mg layer is not particularly limited and may be 1 $\mu$m to 30 $\mu$m. The thickness of the Li-Mg-X layer is not particularly limited and may be 1 $\mu$m to 30 $\mu$m. The thickness of the Li-X layer is not particularly limited and may be 10 nm to 3,000 nm.

When the negative electrode active material layer contains Mg, preferably the Li-Mg layer or the Li-Mg-X layer is formed on a surface of the negative electrode current collector. "The Li-Mg layer or the Li-Mg-X layer is formed on the surface of the negative electrode current collector" means that an Li layer is not interposed between the Li-Mg layer or the Li-Mg-X layer and the negative electrode current collector when the solid-state battery is at full charge.

It is preferred that when the solid-state battery is at full charge, the negative electrode active material layer has an Li layer and an Li-X layer in this order, in the direction from the negative electrode layer toward the side of the solid electrolyte layer. Because of this, the capacity retention rate of the solid electrolyte is higher than when the negative electrode active material layer is a conventional negative electrode active material layer. A conventional negative electrode active material layer has an Li-Zn layer and an Li layer in this order in the SE direction.

It is preferred that when the solid-state battery is at full charge, the negative electrode active material layer has an Li layer and an Li-Sn layer in this order, in the direction from the negative electrode layer toward the side of the solid electrolyte layer. Because of this, the capacity retention rate of the solid electrolyte is higher than when the negative electrode active material layer has an Li layer and an Li-Al layer or an Li-Zn layer in this order in the SE direction.

It is preferred that when the solid-state battery is at full charge, the negative electrode active material layer has the Li-Mg layer or the Li-Mg-X layer and the Li-X layer. Because of this, the capacity retention rate of the solid-state battery is higher than when the negative electrode active material layer has an Li layer and an Li-X layer in this order in the SE direction.

The thickness of the Li-X layer is relatively thin. The Li-X layer is sometimes formed following the surface texture (i.e., the irregular shape) of the solid electrolyte layer. The Li-Mg layer or the Li-Mg-Zn layer tends to take in lithium ions and expand when the solid-state battery is at full charge. Because of this, the number of contact points between the Li-Mg layer or the Li-Mg-Zn layer and the Li-Zn layer increases. That is, the number of reaction fields between the solid electrolyte layer and the negative electrode layer increases. Presumably as a result, the capacity retention rate of the solid-state battery becomes higher.

It is preferred that when the solid-state battery is at full charge, the negative electrode active material layer has an Li-Mg-Al layer and an Li-Al layer in this order, in the direction from the negative electrode layer toward the side of the solid electrolyte layer. Because of this, the capacity retention rate of the solid-state battery is higher than when the negative electrode active material layer has an Li layer and an Li-X layer in this order in the SE direction.

It is preferred that when the solid-state battery is at full charge, the negative electrode active material layer has an Li-Mg-Zn layer and an Li-Zn layer in this order, in the direction from the negative electrode layer toward the side of the solid electrolyte layer. Because of this, the capacity retention rate of the solid-state battery is higher than when the negative electrode active material layer has an Li-Mg-Al layer and an Li-Al layer in this order in the SE direction. This effect is presumably for, but is not limited to, the following reasons.

It is preferred that when the solid-state battery is at full charge, the negative electrode active material layer has the Li-Mg layer and an Li-Sn layer in this order, in the direction from the negative electrode layer toward the side of the solid electrolyte layer. Because of this, the capacity retention rate of the solid-state battery is higher than when the negative electrode active material layer has the Li-Mg layer and an Li-Sn layer in this order in the SE direction.

At full charge, the negative electrode active material layer may have an Li alloy layer between the Li layer, the Li-Mg layer, or the Li-Mg-X layer and the Li-X layer as long as the effects of the present disclosure are not impaired. Examples of the Li alloy layer include an Li-In alloy.

It is preferred that at full charge, the negative electrode active material layer comprises the Li layer, the Li-Mg layer, or the Li-Mg-X layer and the Li-X layer from the standpoint of increasing the capacity retention rate of the solid-state battery.

At discharge (e.g., SOC: 0%), the negative electrode active material layer need not have the Li layer.

(1.2.2) Negative Electrode Current Collector

The negative electrode layer has a negative electrode current collector. The negative electrode current collector collects current from the negative electrode layer. The negative electrode current collector is disposed in a position on an opposite side of the negative electrode layer from the solid electrolyte layer.

The negative electrode current collector may be a material that does not alloy with Li. Examples of the negative electrode current collector include stainless steel, aluminum, copper, nickel, iron, titanium, or carbon. It is preferred that the negative electrode current collector be copper. The shape of the negative electrode current collector is, for example, foil-like or mesh-like.

The negative electrode current collector may have a configuration where a buffer layer, an elastic layer, or a positive temperature coefficient (PTC) thermistor layer is disposed on its surface.

(1.3) Solid Electrolyte Layer

The solid-state battery includes a solid electrolyte layer. The solid electrolyte layer may include a solid electrolyte. The solid electrolyte preferably includes at least one selected from the solid electrolyte group consisting of sulfide solid electrolytes, oxide solid electrolytes, and halide solid electrolytes.

The sulfide solid electrolyte preferably contains sulfur (S) as the main component of an anionic element and more preferably contains the element Li, an element A, and the element S. The element A is at least one type selected from the group consisting of P, As, Sb, Si, Ge, Sn, B, Al, Ga, and In. The sulfide solid electrolyte may further contain at least one of O and a halogen element. Examples of the halogen element (X) include F, Cl, Br, and I. The composition of the sulfide solid electrolyte is not particularly limited, and examples thereof include $x\mathrm{Li_2S} \cdot (100 - x)\mathrm{P_2S_5}$ ($70 \le x \le 80$) or $y\mathrm{LiI} \cdot z\mathrm{LiBr} \cdot (100 - y - z)$ $(x\mathrm{Li_2S} \cdot (1 - x)\mathrm{P_2S_5})$ ($0.7 \le x \le 0.8$, $0 \le y \le 30$, $0 \le z \le 30$). The sulfide solid electrolyte may have a composition represented by the following General Formula (1).

Formula (1):$\qquad$ $\mathrm{Li_{4-x}Ge_{1-x}P_xS_4}$ ($0 < x < 1$)

In Formula (1), at least a part of Ge may be substituted with at least one selected from the group consisting of Sb, Si, Sn, B, Al, Ga, In, Ti, Zr, V, and Nb. At least a part of P may be substituted with at least one selected from the group consisting of Sb, Si, Sn, B, Al, Ga, In, Ti, Zr, V, and Nb. A part of Li may be substituted with at least one selected from the group consisting of Na, K, Mg, Ca, and Zn. A part of S may be substituted with a halogen. The halogen is at least one of F, Cl, Br, and I.

The oxide solid electrolyte preferably contains oxygen (O) as the main component of an anionic element and may contain Li, an element Q (Q represents at least one type of Nb, B, Al, Si, P, Ti, Zr, Mo, W, and S), and O. Examples of the oxide solid electrolyte include garnet-type solid electrolytes, perovskite-type solid electrolytes, NASICON-type solid electrolytes, Li-P-O-based solid electrolytes, or Li-B-O-based solid electrolytes. Examples of garnet-type solid electrolytes include $Li_7La_3Zr_2O_{12}$, $Li_{7-x}La_3(Zr_{2-x}Nb_x)O_{12}$ ($0 \leq x \leq 2$), or $Li_5La_3Nb_2O_{12}$. Examples of perovskite-type solid electrolytes include $(Li,La)TiO_3$, $(Li,La)NbO_3$, or $(Li,Sr)(Ta,Zr)O_3$. Examples of NASICON-type solid electrolytes include $Li(Al,Ti)(PO_4)_3$ or $Li(Al,Ga)(PO_4)_3$. Examples of Li-P-O-based solid electrolytes include $Li_3PO_4$ or LIPON (a compound in which a part of O in $Li_3PO_4$ is substituted with N). Examples of Li-B-O-based solid electrolytes include $Li_3BO_3$ or a compound in which a part of O in $Li_3BO_3$ is substituted with C.

As the halide solid electrolyte, a solid electrolyte including Li, M, and X (M represents at least one of Ti, Al, and Y, and X represents F, Cl, or Br) is preferred. Specifically, $Li_{6-3z}Y_zX_6$ (X represents Cl or Br, and z satisfies $0 < z < 2$) or $Li_{6-(4-x)b}(Ti_{1-x}Al_x)_bF_6$ ($0 < x < 1$, $0 < b \leq 1.5$) is preferred. Among $Li_{6-3z}Y_zX_6$, $Li_3YX_6$ (X represents Cl or Br) is more preferred, and $Li_3YCl_6$ is even more preferred, in terms of excellent lithium ion conductivity. $Li_{6-(4-x)b}(Ti_{1-x}Al_x)_bF_6$ ($0 < x < 1$, $0 < b \leq 1.5$) is preferably included together with a solid electrolyte such as a sulfide solid electrolyte from standpoints such as inhibiting oxidative decomposition of the sulfide solid electrolyte.

The solid electrolyte layer may have a single-layer structure or a multilayer structure having two or more layers.

The solid electrolyte layer may include a binder. Examples of binders that can be included in the solid electrolyte layer include halogenated vinyl resins, rubbers, or polyolefin resins. Examples of halogenated vinyl resins include polyvinylidene fluoride (PVdF) or copolymers of polyvinylidene fluoride and hexafluoropropylene (PVdF-HFP). Examples of polyolefin resins include butadiene rubber (BR), acrylate butadiene rubber (ABR), styrenebutadiene rubber (SBR), acrylonitrile-butadiene rubber (NBR), or butyl rubber (isobutylene-isoprene rubber). Examples of polyolefin resins include polyethylene or polypropylene. The binder (C) may be a diene rubber including a double bond in the main chain (e.g., a butadiene rubber in which butadiene accounts for 30 mol% or higher of the total).

(1.4) Positive Electrode Layer

The solid-state battery includes a positive electrode layer. The positive electrode layer may include a positive electrode current collector and a positive electrode active material layer. The positive electrode active material layer is laminated on a main surface of the positive electrode current collector at a side of the solid electrolyte layer.

(1.4.1) Positive Electrode Active Material Layer

The positive electrode active material layer may contain a positive electrode active material.

(1.4.1.1) Positive Electrode Active Material

The positive electrode active material preferably includes a lithium complex oxide. The lithium complex oxide may contain at least one type selected from the group consisting of F, Cl, N, S, Br, and I. The lithium complex oxide may have a crystalline structure belonging to at least one space group selected from the space groups R-3m, Immm, and P63-mmc (also called P63mc, P6/mmc). The main array of the transition metal, oxygen, and lithium in the lithium complex oxide may have an O2 structure.

Examples of lithium complex oxides having a crystalline structure belonging to R-3m include compounds represented by $Li_xMe_yO_\alpha X_\beta$ (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, X represents at least one type selected from the group consisting of F, Cl, N, S, Br, and I, and $0.5 \leq x \leq 1.5$, $0.5 \leq y \leq 1.0$, $1 \leq \alpha < 2$, and $0 < \beta \leq 1$).

Examples of lithium complex oxides having a crystalline structure belonging to Immm include complex oxides represented by $Li_{x1}M^1A^1_2$ ($1.5 \leq x1 \leq 2.3$ is satisfied, $M^1$ includes at least one type selected from the group consisting of Ni, Co, Mn, Cu, and Fe, $A^1$ includes at least oxygen, and the percentage of oxygen in $A^1$ is 85 at% or higher) (a specific example is $Li_2NiO_2$) and compounds represented by $Li_{x1}M^{1A}_{1-x2}M^{1B}_{x-2}O_{2-y}A^2y$ ($0 \leq x2 \leq 0.5$ and $0 \leq y \leq 0.3$ are satisfied, at least one of x2 and y is not 0, $M^{1A}$ represents at least one type selected from the group consisting of Ni, Co, Mn, Cu, and Fe, $M^{1B}$ represents at least one type selected from the group consisting of Al, Mg, Sc, Ti, Cr, V, Zn, Ga, Zr, Mo, Nb, Ta, and W, and $A^2$ represents at least one type selected from the group consisting of F, Cl, Br, S, and P).

**EP 4 685 910 A1**

Examples of lithium complex oxides having a crystalline structure belonging to P63-mmc include complex oxides represented by $Ml_xM2_yO_2$ (M1 represents an alkali metal (preferably at least one type of Na and K), M2 represents a transition metal (preferably at least one type selected from the group consisting of Mn, Ni, Co, and Fe), and x + y satisfies 0 < x + y ≤ 2).

Examples of lithium complex oxides having an O2 structure include complex oxides represented by $Li_x[Li_\alpha(Mn_aCo_bM_c)_{1-\alpha}]O_2$ (0.5 < x < 1.1, 0.1 < $\alpha$ < 0.33, 0.17 < a < 0.93, 0.03 < b < 0.50, 0.04 < c < 0.33, and M represents at least one type selected from the group consisting of Ni, Mg, Ti, Fe, Sn, Zr, Nb, Mo, W, and Bi), and specific examples thereof include $Li_{0.744}[Li_{0.145}Mn_{0.625}Co_{0.115}Ni_{0.115}]O_2$.

(1.4.1.2) Solid Electrolyte Group

The positive electrode layer preferably includes, in addition to the positive electrode active material, a solid electrolyte selected from the solid electrolyte group consisting of sulfide solid electrolytes, oxide solid electrolytes, and halide solid electrolytes. An aspect where at least a part of the surface of the positive electrode active material is coated with a sulfide solid electrolyte, an oxide solid electrolyte, or a halide solid electrolyte is more preferred. As the halide solid electrolyte that coats at least a part of the surface of the positive electrode active material, $Li_{6-(4-x)b}(Ti_{1-x}Al_x)_bF_6$ (0 < x < 1, 0 < b ≤ 1.5) (hereinafter also called "the LTAF electrolyte") is preferred.

(1.4.1.3) Conductive Additive

The positive electrode layer may include a conductive additive. Examples of conductive additives include carbon materials, metal materials, or conductive polymer materials. Examples of carbon materials include carbon black (e.g., acetylene black, furnace black, or ketjen black), fibrous carbon (e.g., vapor-phase carbon fibers, carbon nanotubes, or carbon nanofibers), graphite, or carbon fluoride. Examples of metal materials include metal powders (e.g., aluminum powder), conductive whiskers (e.g., zinc oxide or potassium titanate), or conductive metal oxides (e.g., titanium oxide). Examples of conductive polymer materials include polyaniline, polypyrrole, or polythiophene. Just one type of conductive additive may be used alone, or a mixture of two or more types may be used.

(1.4.1.4) Binder

The positive electrode layer may include a binder. Examples of binders that can be included in the positive electrode layer include the same ones as those that were exemplified as binders that can be included in the solid electrolyte layer.

(1.4.1.5) Other Components

The positive electrode layer may contain other components. Examples of the other components include thickeners, surfactants, dispersants, wetting agents, or antifoaming agents.

(1.4.2) Positive Electrode Current Collector

The positive electrode layer may further include a positive electrode current collector. The positive electrode current collector collects current from the positive electrode layer. The positive electrode current collector is disposed in a position on the opposite side of the positive electrode layer from the solid electrolyte layer.

Examples of the material of the positive electrode current collector include stainless steel, aluminum, copper, nickel, iron, titanium, or carbon. The positive electrode current collector is preferably aluminum alloy foil or aluminum foil. The aluminum alloy foil and the aluminum foil may be manufactured using powder. The shape of the positive electrode current collector is, for example, foil-like or mesh-like.

The positive electrode current collector may have a configuration where a buffer layer, an elastic layer, or a positive temperature coefficient (PTC) thermistor layer is disposed on its surface.

(2) Solid-state Battery Manufacturing Method

The solid-state battery manufacturing method of the present disclosure is a method of manufacturing a solid-state battery having a positive electrode layer, a solid electrolyte layer, and a negative electrode layer in this order. The solid-state battery manufacturing method of the present disclosure includes a step of forming an X layer on the surface of the solid electrolyte layer at a side of the negative electrode layer (hereinafter also called "the X layer formation step"). X is at least one selected from the group consisting of Sn, Zn, and Al.

In the present disclosure, "X layer" refers to a metal layer whose main component is the metal element X. The percentage of the metal element X in the "X layer" may be 100 at% relative to the total amount of all elements configuring the X layer. The "X layer" is a precursor of the "Li-X layer" in the present disclosure. More specifically, the X layer becomes the Li-X layer when lithium ions are taken in by charging the solid-state battery.

Since the solid-state battery manufacturing method of the present disclosure has the above configuration, the solid-state battery of the present disclosure can be prepared.

The solid-state battery manufacturing method of the present disclosure includes a first embodiment and a second embodiment described below.

(2.1) First Embodiment

The solid-state battery manufacturing method pertaining to the first embodiment includes the X layer formation step, a first lamination step described below, and a first charging step described below. The X layer formation step, the first lamination step, and the first charging step are implemented in this order.

According to the first embodiment, a first solid-state battery is obtained. The first solid-state battery includes a positive electrode layer, a solid electrolyte layer, and a negative electrode layer in this order. The negative electrode layer has a negative electrode current collector and a negative electrode active material layer in this order in the SE direction. When the first solid-state battery is at full charge, the negative electrode active material layer has an Li layer and an Li-X layer in this order in the SE direction. The Li-X layer is formed on the surface of the solid electrolyte layer.

(2.1.1) X Layer Formation Step

In the X layer formation step, the X layer is formed on the surface of the solid electrolyte layer at the side of the negative electrode layer. Because of this, a solid electrolyte layer with the X layer is prepared. The solid electrolyte layer with the X layer has the solid electrolyte layer and the X layer that is formed on the surface of the solid electrolyte layer at a side of the negative electrode layer.

The method of preparing the solid electrolyte layer may be any known method, such as pressing methods. Examples of pressing methods include roll pressing or cold isostatic pressing (CIP). The pressing pressure is ordinarily 1 MPa to 600 MPa. Examples of the solid electrolyte layer include the same ones as those that were exemplified as the solid electrolyte layer included in the solid-state battery of the present disclosure.

The method of forming the X layer is not particularly limited and may be any known method, such as dry processes or wet processes.

In dry processes, the X layer is formed by a process in a gas phase or in a vacuum. More specifically, examples of dry processes include physical vapor deposition (e.g., vacuum deposition, ion plating, or sputtering), chemical vapor deposition (e.g., thermal chemical vapor deposition (CVD), plasma CVD, or plasma CVD), and thermal spraying (e.g., flame spraying, arc spraying, or plasma spraying).

In wet processes, the X film is formed using a solution. More specifically, examples of wet processes include plating (e.g., electroplating, electroless plating, or electroforming) or electrolytic polymerization.

Among them, physical vapor deposition or chemical vapor deposition is preferred as the method of forming the X layer. Because of this, the uniformity of the initial X layer is more excellent and the adhesion between the X layer and the solid electrolyte layer is more excellent than when the method of forming the X layer is a pressing method or fine particle coating. As a result, a solid-state battery with a higher capacity retention rate is obtained. This is presumably for the following reasons.

With physical vapor deposition or chemical vapor deposition, the X layer is formed thinner and with a uniform thickness following the uneven shape of the interface of the solid electrolyte. In addition, the adhesion between the solid electrolyte and the X layer is strong. For that reason, voids are unlikely to be formed in the interface between the solid electrolyte layer and the X layer. As a result, the battery performance of the solid-state battery is unlikely to deteriorate.

By contrast, with pressing methods or fine particle coating, the X layer tends to become a film with a nonuniform thickness depending on the location in the interface of the solid electrolyte. For example, the X layer may eat into the uneven shape of the interface of the solid electrolyte layer. The X layer may pool a lot in recesses in the interface of the solid electrolyte. For that reason, irregularities tend to arise in the progression of the Li deposition reaction. As a result, there may be voids in the interface between the X layer and the Li layer. In addition, due to the nonuniformity in the thickness of the X layer and weak adhesion between the X layer and the solid electrolyte layer, there may be places where the solid electrolyte layer is partially exposed. From there, the reaction with the solid electrolyte may progress, and the battery performance of the solid-state battery may deteriorate.

The thickness of the X layer is not particularly limited and may be 1 nm to 1,000 nm.

(2.1.2) First Lamination Step

In the first lamination step, the negative electrode current collector, the solid electrolyte layer with the X layer, and the positive electrode layer are laminated in this order to form a first battery precursor. The first battery precursor comprises the negative electrode current collector, the X layer, the solid electrolyte layer, and the positive electrode layer that are laminated in this order.

The method of preparing the negative electrode current collector and the positive electrode layer may be any known method. Examples of the negative electrode current collector include the same ones as those that were exemplified as the negative electrode current collector included in the solid-state battery of the present disclosure. Examples of the positive electrode layer include the same ones as those that were exemplified as the positive electrode layer included in the solid-state battery of the present disclosure.

Examples of the lamination method include pressing methods. A slurry may be used when forming the positive electrode layer. Examples of pressing methods include roll pressing or cold isostatic pressing (CIP). The pressing pressure is ordinarily 1 MPa to 600 MPa.

(2.1.3) First Charging Step

In the first charging step, the first battery precursor is charged to prepare the first solid-state battery.

When implementing the first charging step, lithium ions move from the positive electrode layer to the negative electrode layer. Because of this, metallic lithium is deposited between the X layer and the negative electrode current collector layer. As a result, the Li layer is selectively formed between the X layer and the negative electrode current collector layer. This is presumably for the following reasons. That is, after the solid-state battery is charged, the X layer and Li react to form the Li-X layer. The Li-X layer has lithium ion conductivity. For that reason, the lithium ions that have moved from the positive electrode pass through the Li-X layer, reach the top of the negative electrode current collector (or Li that has already been deposited), and are deposited. As a result, the Li layer is selectively formed between the X layer and the negative electrode current collector layer.

The charging conditions in the first charging step are not particularly limited and may be appropriately selected in accordance with the thickness of the X layer, for example.

(2.2) Second Embodiment

The solid-state battery manufacturing method pertaining to the second embodiment includes the X layer formation step, a step of forming a Mg layer on the surface of the negative electrode current collector at a side of the solid electrolyte layer (hereinafter also called "the Mg layer formation step"), a second battery precursor formation step, and a second charging step. The order in which the X layer formation step and the Mg layer formation step are implemented is not particularly limited. After the X layer formation step and the Mg layer formation step are implemented, the second battery precursor formation step and the second charging step are implemented in this order.

According to the second embodiment, a second solid-state battery is obtained. The second solid-state battery includes a positive electrode layer, a solid electrolyte layer, and a negative electrode layer in this order. The negative electrode layer includes a negative electrode current collector and a negative electrode active material layer in this order in the SE direction. When the second solid-state battery is at full charge, the negative electrode active material layer includes an Li-Mg layer or an Li-Mg-X layer and an Li-X layer in this order in the SE direction. The Li-X layer is formed on the surface of the solid electrolyte layer.

(2.2.1) X Layer Formation Step

The X layer formation step is the same as the one exemplified as the X layer formation step of the first embodiment.

(2.2.2) Mg Layer Formation Step

In the second embodiment, the negative electrode layer has a negative electrode current collector. In the Mg layer formation step, a Mg layer is formed on the surface of the negative electrode current collector at the side of the solid electrolyte layer. Because of this, a negative electrode current collector with a Mg layer is prepared. The negative electrode current collector with the Mg layer has the negative electrode current collector and the Mg layer that is formed on the surface of the negative electrode current collector at the side of the solid electrolyte layer.

The method of preparing the negative electrode current collector may be any known method. Examples of the negative electrode current collector include the same ones as those that were exemplified as the negative electrode current collector included in the solid-state battery of the present disclosure.

The method of forming the Mg layer is not particularly limited, and examples thereof include the same methods as the methods exemplified as methods of forming the X layer. Among them, physical vapor deposition or chemical vapor deposition is preferred as the method of forming the Mg layer.

The thickness of the Mg layer is not particularly limited and may be 30 nm and 3,000 nm.

(2.2.3) Second Lamination Step

In the second lamination step, the negative electrode current collector with the Mg layer, the solid electrolyte layer with the X layer, and the positive electrode layer are laminated in this order to form a second battery precursor. The second battery precursor comprises the negative electrode current collector, the Mg layer, the X layer, the solid electrolyte layer, and the positive electrode layer that are laminated in this order.

The method of preparing the positive electrode layer may be any known method. Examples of the positive electrode layer include the same ones as those that were exemplified as the positive electrode layer included in the solid-state battery of the present disclosure.

Examples of the lamination method include pressing methods. A slurry may be used when forming the positive electrode layer. Examples of pressing methods include roll pressing or cold isostatic pressing (CIP). The pressing pressure is ordinarily 1 MPa to 600 MPa.

(2.2.4) Second Charging Step

In the second charging step, the second battery precursor is charged to prepare the second solid-state battery.

When implementing the second charging step, lithium ions move from the positive electrode layer to the negative electrode layer. The lithium ions are taken into each of the Mg layer and the X layer to form the Li-Mg layer or the Li-Mg-X layer and the Li-X layer. At this time, an Li layer is not formed between the solid electrolyte layer and the negative electrode current collector. This is because the deposited Li and Mg interdiffuse such that a concentration difference occurs. Presumably this is because the concentration difference becomes a driving force whereby the Li-Mg layer or the Li-Mg-X layer is formed.

The charging conditions in the second charging step are not particularly limited and may be appropriately selected in accordance with the thickness of the Mg layer and the thickness of the X layer, for example.

[Examples]

The present disclosure will now be described in greater detail below by way of Examples, but the invention of the present disclosure is not limited to just these Examples.

[1] Examples and Comparative Examples

[1.1] Example 1

[1.1.1] Solid-state Battery

A positive electrode mixture including $LiNi_{1/3}Co_{1/3}Mn_{1/3}O_2$, a binder, and a solvent was applied to one surface of an Al current collector foil to obtain a positive electrode layer.

A mixture of a $Li_2S-P_2S_5$-based material including LiBr and LiI, a binder, and a solvent was prepared as a sulfide solid electrolyte. This mixture was applied to a resin film to prepare a solid electrolyte thin film. The solid electrolyte thin film was pressed at a pressure of 7 ton/cm$^2$ to obtain a solid electrolyte layer.

A Sn material was prepared as raw material for a modification layer. Using the Sn material and a magnetron sputter coater, Sn was deposited on one surface of the solid electrolyte layer to form a Sn layer (i.e., a modification layer) with a thickness of 100 nm.

A Ni current collector foil was disposed as a negative electrode current collector on the surface of the solid electrolyte layer on which the Sn layer was disposed. The positive electrode layer was disposed on the surface of the solid electrolyte layer on the opposite side of the surface on which the Sn layer was disposed, so that the solid electrolyte layer and the positive electrode layer were in contact with each other. These were press-formed by cold isostatic pressing (CIP) at a pressure of 4 ton/cm$^2$ to obtain a solid-state battery. The solid-state battery had a positive electrode current collector, the positive electrode layer, the solid electrolyte layer, the Sn layer, and the negative electrode current collector in this order.

[1.1.2] Negative Electrode Active Material Layer when Solid-state Battery was at Full Charge

The solid-state battery in a charged state was cross-sectioned, and the negative electrode active material layer was observed with a secondary electron microscope SEM. The thickness of the layer appearing as the Li layer was confirmed. The type and concentration of the contained metal species and the thickness of the Li-Sn layer were estimated from elemental mapping and a spectrum analysis of each layer with an energy dispersive X-ray analyzer (EDX). Because of this, it was found that the negative electrode active material layer of Example 1 had an Li layer and an Li-Sn layer in this order in the SE direction when the solid-state battery was at full charge.

[1.2] Example 2

[1.2.1] Solid-state Battery

A solid-state battery was obtained in the same way as in Example 1 except that the Sn material was changed to an Al material. The solid-state battery had a positive electrode current collector, a positive electrode layer, a solid electrolyte layer, an Al layer, and a negative electrode current collector in this order.

[1.2.2] Negative Electrode Active Material Layer when Solid-state Battery was at Full Charge

The solid-state battery in a charged state was cross-sectioned, and the negative electrode active material layer was analyzed in the same way as in Example 1. Because of this, it was found that that the negative electrode active material layer of Example 2 had an Li layer and an Li-Al layer in this order in the SE direction when the solid-state battery was at full charge.

[1.3] Example 3

[1.3.1] Solid-state Battery

A solid-state battery was obtained in the same way as in Example 1 except that the Sn material was changed to a Zn material. The solid-state battery had a positive electrode current collector, a positive electrode layer, a solid electrolyte layer, a Zn layer, and a negative electrode current collector in this order.

[1.3.2] Negative Electrode Active Material Layer when Solid-state Battery was at Full Charge

The solid-state battery in a charged state was cross-sectioned, and the negative electrode active material layer was analyzed in the same way as in Example 1. Because of this, it was found that the negative electrode active material layer of Example 3 had an Li layer and an Li-Zn layer in this order in the SE direction when the solid-state battery was at full charge.

[1.4] Example 4

[1.4.1] Solid-state Battery

A positive electrode mixture including $LiNi_{1/3}Co_{1/3}Mn_{1/3}O_2$, a binder, and a solvent was applied to one surface of an Al current collector foil to obtain a positive electrode layer.

A mixture of a $Li_2S\text{-}P_2S_5$-based material including LiBr and LiI, a binder, and a solvent was prepared as a sulfide solid electrolyte. This mixture was applied to a resin film to prepare a solid electrolyte thin film. The solid electrolyte thin film was pressed at a pressure of 7 ton/cm$^2$ to obtain a solid electrolyte layer.

A Sn material was prepared as raw material for a modification layer, Using the Sn material and a magnetron sputter coater, Sn was deposited on one surface of the solid electrolyte layer to form a Sn layer (i.e., a modification layer) with a thickness of 100 nm.

Using an electron beam evaporation system, Mg was deposited on one surface of a Ni foil serving as a negative electrode current collector to form a Mg layer with a thickness of 1,000 nm.

The Ni current collector foil having the Mg layer on one surface was disposed on the surface of the solid electrolyte layer on which the Sn layer was disposed. The positive electrode layer was disposed on the surface of the solid electrolyte layer on the opposite side of the surface on which the Sn layer was disposed, so that the solid electrolyte layer and the positive electrode layer were in contact with each other. These were press-formed by cold isostatic pressing (CIP) at a pressure of 4 ton/cm$^2$ to obtain a solid-state battery. The solid-state battery had a positive electrode current collector, the positive electrode layer, the solid electrolyte layer, the Sn layer, the Mg layer, and the negative electrode current collector in this order.

[1.4.2] Negative Electrode Active Material Layer when Solid-state Battery was at Full Charge

The solid-state battery in a charged state was cross-sectioned, and the negative electrode active material layer was analyzed in the same way as in Example 1. Because of this, it was found that the negative electrode active material layer of Example 4 had an Li-Mg layer and an Li-Sn layer in this order in the SE direction when the solid-state battery was at full charge.

[1.5] Example 5

[1.5.1] Solid-state Battery

A solid-state battery was obtained in the same way as in Example 4 except that the Sn material was changed to an Al material. The solid-state battery had a positive electrode current collector, a positive electrode layer, a solid electrolyte layer, an Al layer, a Mg layer, and a negative electrode current collector in this order.

[1.5.2] Negative Electrode Active Material Layer when Solid-state Battery when at Full Charge

The solid-state battery in a charged state was cross-sectioned, and the negative electrode active material layer was analyzed in the same way as in Example 1. Because of this, it was found that the negative electrode active material layer of Example 5 had an Li-Mg-Al layer and an Li-Al layer in this order in the SE direction when the solid-state battery was at full charge.

[1.6] Example 6

[1.6.1] Solid-state Battery

A solid-state battery was obtained in the same way as in Example 4 except that the Sn material was changed to a Zn material. The solid-state battery had a positive electrode current collector, a positive electrode layer, a solid electrolyte layer, a Zn layer, a Mg layer, and a negative electrode current collector in this order.

[1.6.2] Negative Electrode Active Material Layer when Solid-state Battery was at Full Charge

The solid-state battery in a charged state was cross-sectioned, and the negative electrode active material layer was analyzed in the same way as in Example 1. Because of this, it was found that the negative electrode active material layer of Example 6 had an Li-Mg-Zn layer and an Li-Zn layer in this order in the SE direction when the solid-state battery was at full charge.

[1.7] Comparative Example 1

[1.7.1] Solid-state Battery

A positive electrode mixture including $LiNi_{1/3}Co_{1/3}Mn_{1/3}O_2$, a binder, and a solvent was applied to one surface of an Al current collector foil to obtain a positive electrode layer.

A mixture of a $Li_2S$-$P_2S_5$-based material including LiBr and LiI, a binder, and a solvent was prepared as a sulfide solid electrolyte. This mixture was applied to a resin film to prepare a solid electrolyte thin film. The solid electrolyte thin film was pressed at a pressure of 7 ton/cm$^2$ to obtain a solid electrolyte layer.

A Ni current collector foil was disposed as a negative electrode current collector on one surface of the solid electrolyte layer. The positive electrode layer was disposed on the surface of the solid electrolyte layer on the opposite side of the surface on which the Ni current collector was disposed, so that the solid electrolyte layer and the positive electrode layer were in contact with each other. These were press-formed by cold isostatic pressing (CIP) at a pressure of 4 ton/cm$^2$ to obtain a solid-state battery. The solid-state battery had a positive electrode current collector, the positive electrode layer, the solid electrolyte layer, and the negative electrode current collector in this order.

[1.7.2] Negative Electrode Active Material Layer when Solid-State Battery was at Full Charge

A short circuit occurred while charging the solid-state battery of Comparative Example 1. For that reason, the solid-state battery of Comparative Example 1 did not function as a battery.

[1.8] Comparative Example 2

[1.8.1] Solid-state Battery

A positive electrode mixture including $LiNi_{1/3}Co_{1/3}Mn_{1/3}O_2$, a binder, and a solvent was applied to one surface of an Al current collector foil to obtain a positive electrode layer.

A mixture of a $Li_2S-P_2S_5$-based material including LiBr and LiI, a binder, and a solvent was prepared as a sulfide solid electrolyte. This mixture was applied to a resin film to prepare a solid electrolyte thin film. The solid electrolyte thin film was pressed at a pressure of 7 $ton/cm^2$ to obtain a solid electrolyte layer.

Using an electron beam evaporation system, Mg was deposited on one surface of a Ni foil serving as a negative electrode current collector to form a Mg layer with a thickness of 1,000 nm.

The Ni current collector foil having the Mg layer on one surface was disposed on one surface of the solid electrolyte layer. The positive electrode layer was disposed on the surface of the solid electrolyte layer on the opposite side of the surface on which the Mg layer was disposed, so that the solid electrolyte layer and the positive electrode layer were in contact with each other. These were press-formed by cold isostatic pressing (CIP) at a pressure of 4 $ton/cm^2$ to obtain a solid-state battery. The solid-state battery had a positive electrode current collector, the positive electrode layer, the solid electrolyte layer, the Mg layer, and the negative electrode current collector in this order.

[1.8.2] Negative Electrode Active Material Layer when Solid-state Battery was at Full Charge

The solid-state battery in a charged state was cross-sectioned, and the negative electrode active material layer was analyzed in the same way as in Example 1. Because of this, it was found that the negative electrode active material layer of Comparative Example 2 had an Li-Mg layer and an Li layer in this order in the SE direction when the solid-state battery was at full charge.

[1.9] Comparative Example 3

[1.9.1] Solid-state Battery

A positive electrode mixture including $LiNi_{1/3}Co_{1/3}Mn_{1/3}O_2$, a binder, and a solvent was applied to one surface of an Al current collector foil to obtain a positive electrode layer.

A mixture of a $Li_2S-P_2S_5$-based material including LiBr and LiI, a binder, and a solvent was prepared as a sulfide solid electrolyte. This mixture was applied to a resin film to prepare a solid electrolyte thin film. The solid electrolyte thin film was pressed at a pressure of 7 $ton/cm^2$ to obtain a solid electrolyte layer.

Using a magnetron sputter coater, Zn was deposited on one surface of a Ni foil serving as a negative electrode current collector to form a Zn layer with a thickness of 1000 nm.

The Ni current collector foil having the Zn layer on one surface was disposed on one surface of the solid electrolyte layer. The positive electrode layer was disposed on the surface of the solid electrolyte layer on the opposite side of the surface on which the Zn layer was disposed, so that the solid electrolyte layer and the positive electrode layer were in contact with each other. These were press-formed by cold isostatic pressing (CIP) at a pressure of 4 $ton/cm^2$ to obtain a solid-state battery. The solid-state battery had a positive electrode current collector, the positive electrode layer, the solid electrolyte layer, the Zn layer, and the negative electrode current collector in this order.

[1.9.2] Negative Electrode Active Material Layer when Solid-state Battery was at Full Charge

The solid-state battery in a charged state was cross-sectioned, and the negative electrode active material layer was analyzed in the same way as in Example 1. Because of this, it was found that the negative electrode active material layer of Comparative Example 3 had an Li-Zn layer and an Li layer in this order in the SE direction when the solid-state battery was at full charge.

[2] Measurement of Capacity Retention Rates

Capacity retention rates were calculated using Equation (2) below by comparing the initial discharge capacity with the discharge capacity after 20 repeated charge and discharge cycles.

Capacity retention rate (%) = (discharge capacity after 20 cycles / discharge capacity after 1 cycle) $\times$ 100

Table 1 shows the capacity retention rate measurement results. In Comparative Example 1, the capacity retention rate could not be measured because a short circuit occurred. The allowable range for the capacity retention rate was 75.0% or higher.

[Table 1]

| | Negative Electrode Active Material Layer | | | | | | Capacity Retention Rate (%) |
| --- | --- | --- | --- | --- | --- | --- | --- |
| | Uncharged | | | At Full Charge | | | |
| | Layer Configuration | CC Side | SE Side | Layer Configuration | CC Side | SE Side | |
| Com. Ex. 1 | - | - | - | - | - | - | - |
| Com. Ex. 2 | 1 layer | Mg layer | - | 2 layers | Li-Mg layer | Li layer | 56.60 |
| Com. Ex. 3 | 1 layer | Zn layer | - | 2 layers | Li-Zn layer | Li layer | 66.41 |
| Ex. 1 | 1 layer | - | Sn layer | 2 layers | Li layer | Li-Sn layer | 82.87 |
| Ex. 2 | 1 layer | - | Al layer | 2 layers | Li layer | Li-Al layer | 77.79 |
| Ex. 3 | 1 layer | - | Zn layer | 2 layers | Li layer | Li-Zn layer | 75.87 |
| Ex. 4 | 2 layers | Mg layer | Sn layer | 2 layers | Li-Mg layer | Li-Sn layer | 94.78 |
| Ex. 5 | 2 layers | Mg layer | Al layer | 2 layers | Li-Mg-Al layer | Li-Al layer | 92.20 |
| Ex. 6 | 2 layers | Mg layer | Zn layer | 2 layers | Li-Mg-Zn layer | Li-Zn layer | 94.54 |

In Table 1, a "-" under "Negative Electrode Active Material Layer" means that there was no layer. A "-" under "Capacity Retention Rate" means that the capacity retention rate could not be measured. "CC Side" under "Uncharged" refers to the layer formed on the surface of the negative electrode current collector. "SE Side" under "Uncharged" refers to the layer formed on the surface of the solid electrolyte layer. "CC Side" under "At Full Charge" refers to the layer of the negative electrode active material layer on the negative electrode current collector side thereof. "SE Side" under "At Full Charge" refers to the layer of the negative electrode active material layer at the side of the solid electrolyte layer.
The negative electrode layer of Comparative Example 1 did not have a negative electrode active material layer. For that reason, a short circuit occurred while charging the solid-state battery of Comparative Example 1.
The negative electrode active material layers of Comparative Example 2 and Comparative Example 3 did not have an Li layer, an Li-Mg layer, or an Li-Mg-X layer and an Li-X layer in this order in the SE direction when the solid-state battery was at full charge. For that reason, the capacity retention rates of Comparative Example 2 and Comparative Example 3 were less than 75.0%.
From these results, it was found that the solid-state batteries of Comparative Example 1 to Comparative Example 3 were not solid-state batteries with high capacity retention rates.
The negative electrode active material layer of Example 1 had an Li layer and an Li-Sn layer in this order in the SE direction when the solid-state battery was at full charge. The Li-Sn layer was formed on the surface of the solid electrolyte layer.
The negative electrode active material layer of Example 2 had an Li layer and an Li-Al layer in this order in the SE direction when the solid-state battery was at full charge. The Li-Al layer was formed on the surface of the solid electrolyte layer.
The negative electrode active material layer of Example 3 had an Li layer and an Li-Zn layer in this order in the SE direction when the solid-state battery was at full charge. The Li-Zn layer was formed on the surface of the solid electrolyte layer.
The negative electrode active material layer of Example 4 had an Li-Mg layer and an Li-Sn layer in this order in the SE direction when the solid-state battery was at full charge. The Li-Sn layer was formed on the surface of the solid electrolyte layer.
The negative electrode active material layer of Example 5 had an Li-Mg-Al layer and an Li-Al layer in this order in the SE direction when the solid-state battery was at full charge. The Li-Al layer was formed on the surface of the solid electrolyte layer.

The negative electrode active material layer of Example 6 had an Li-Mg-Zn layer and an Li-Zn layer in this order in the SE direction when the solid-state battery was at full charge. The Li-Zn layer was formed on the surface of the solid electrolyte layer.

For that reason, the capacity retention rates of Example 1 to Example 6 were 75.0% or higher.

From these results, it was found that the solid-state batteries of Example 1 to Example 6 were solid-state batteries with high capacity retention rates.

The disclosure of Japanese Patent Application No. 2023-046041 filed on March 22, 2023, is incorporated in its entirety by reference herein.

All documents, patent applications, and technical standards mentioned in this specification are incorporated by reference herein to the same extent as if each individual document, patent application, or technical standard were specifically and individually indicated to be incorporated by reference.

**Claims**

1. A solid-state battery, comprising a positive electrode layer, a solid electrolyte layer, and a negative electrode layer in this order, wherein:

   the negative electrode layer has a negative electrode current collector and a negative electrode active material layer in this order, in a direction from the negative electrode layer toward a side of the solid electrolyte layer, when the solid-state battery is at full charge, the negative electrode active material layer has an Li layer, an Li-Mg layer, or an Li-Mg-X layer and an Li-X layer in this order, in the direction from the negative electrode layer toward the side of the solid electrolyte layer,
   X is at least one selected from the group consisting of Sn, Zn, and Al, and
   the Li-X layer is formed on a surface of the solid electrolyte layer.

2. The solid-state battery of claim 1, wherein, when the solid-state battery is at full charge, the negative electrode active material layer has the Li-Mg layer or the Li-Mg-X layer and the Li-X layer.

3. The solid-state battery of claim 1 or claim 2, wherein, when the solid-state battery is at full charge, the negative electrode active material layer has the Li-Mg layer and an Li-Sn layer in this order, in the direction from the negative electrode layer toward the side of the solid electrolyte layer.

4. The solid-state battery of claim 1 or claim 2, wherein, when the solid-state battery is at full charge, the negative electrode active material layer has an Li-Mg-Zn layer and an Li-Zn layer in this order, in the direction from the negative electrode layer toward the side of the solid electrolyte layer.

5. The solid-state battery of claim 1 or claim 2, wherein, when the solid-state battery is at full charge, the negative electrode active material layer has an Li-Mg-Al layer and an Li-Al layer in this order, in the direction from the negative electrode layer toward the side of the solid electrolyte layer.

6. The solid-state battery of claim 1, wherein, when the solid-state battery is at full charge, the negative electrode active material layer has an Li layer and an Li-X layer in this order, in the direction from the negative electrode layer toward the side of the solid electrolyte layer.

7. The solid-state battery of claim 6, wherein, when the solid-state battery is at full charge, the negative electrode active material layer has an Li layer and an Li-Sn layer in this order, in the direction from the negative electrode layer toward the side of the solid electrolyte layer.

8. A method of manufacturing a solid-state battery having a positive electrode layer, a solid electrolyte layer, and a negative electrode layer in this order, the method comprising:

   a step of forming an X layer on a surface of the solid electrolyte layer at a side of the negative electrode layer, wherein X is at least one selected from the group consisting of Sn, Zn, and Al.

9. The solid-state battery manufacturing method of claim 8, wherein:

   the negative electrode layer has a negative electrode current collector, and

the method further comprises a step of forming an Mg layer on a surface of the negative electrode current collector at a side of the solid electrolyte layer.

## INTERNATIONAL SEARCH REPORT

| | International application No. |
|---|---|
| | **PCT/JP2024/008331** |

**A. CLASSIFICATION OF SUBJECT MATTER**

*H01M 10/058*(2010.01)i; *H01M 4/134*(2010.01)i; *H01M 10/052*(2010.01)i; *H01M 10/0562*(2010.01)i
FI:   H01M10/058; H01M10/0562; H01M4/134; H01M10/052

According to International Patent Classification (IPC) or to both national classification and IPC

**B. FIELDS SEARCHED**

Minimum documentation searched (classification system followed by classification symbols)

H01M10/058; H01M4/134; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2019/0088986 A1 (UNIVERSITY OF MARYLAND, COLLEGE PARK) 21 March 2019 (2019-03-21) | 1, 6-8 |
| | fig. 12 | |
| A | | 2-5, 9 |
| P, X | JP 2023-131976 A (TOYOTA JIDOSHA KABUSHIKI KAISHA) 22 September 2023 (2023-09-22) | 1, 2, 5 |
| | paragraph [0070], examples | |
| P, A | | 3-4, 6-9 |
| A | WO 2019/151376 A1 (HONDA MOTOR CO., LTD.) 08 August 2019 (2019-08-08) | 1-9 |
| A | WO 2023/032185 A1 (TERAWATT TECHNOLOGY K.K.) 09 March 2023 (2023-03-09) | 1-9 |
| A | JP 2005-50806 A (SONY CORPORATION) 24 February 2005 (2005-02-24) | 1-9 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/008331**

| Patent document cited in search report | | | Publication date (day/month/year) | Patent family member(s) | | | Publication date (day/month/year) |
|---|---|---|---|---|---|---|---|
| US | 2019/0088986 | A1 | 21 March 2019 | EP | 3449519 | A1 | |
| JP | 2023-131976 | A | 22 September 2023 | (Family: none) | | | |
| WO | 2019/151376 | A1 | 08 August 2019 | US claim 1, examples | 2021/0104774 | A1 | |
| | | | | CN | 111670510 | A | |
| WO | 2023/032185 | A1 | 09 March 2023 | (Family: none) | | | |
| JP | 2005-50806 | A | 24 February 2005 | US | 2005/0014068 | A1 | |
| | | | | KR | 10-1113350 | B1 | |
| | | | | CN | 1610148 | A | |

Form PCT/ISA/210 (patent family annex) (July 2022)

**EP 4 685 910 A1**

**REFERENCES CITED IN THE DESCRIPTION**

**Patent documents cited in the description**

- JP 2018129159 A
- JP 2023046041 A